# EUROPÄISCHE PATENTSCHRIFT

(11) **EP 1 738 632 B1**
(45) Veröffentlichungstag und Bekanntmachung des Hinweises auf die Patenterteilung: **01.10.2008**
(21) Anmeldenummer: 06012705.7
(22) Anmeldetag: 21.06.2006
(51) Int. Cl.: A01C 17/00

(54) **Schleuderstreuer für Streugut**
Centrifugal spreader for spreading material
Epandeur centrifuge pour matériau d'épandage

(30) Priorität: 01.07.2005 DE 102005030781
(43) Veröffentlichungstag der Anmeldung: 03.01.2007
(73) Patentinhaber: RAUCH LANDMASCHINENFABRIK GMBH, D-76547 Sinzheim (DE)
(72) Erfinder: Doll, Franz, 76547 Sinzheim (DE); Gushurst, Hans, 76547 Sinzheim (DE); Zeitvogel, Thomas, 77836 Rheinmünster (DE); Weisser, Thomas, 78052 Villingen-Schwenningen / Rietheim (DE); Rauch, Norbert, 77815 Bühl (DE)
(74) Vertreter: Lichti, Heiner

(56) Entgegenhaltungen:
- EP-A1- 0 329 072
- DE-A1- 1 582 091
- DE-U1- 29 922 050
- GB-A- 1 202 813
- NL-A- 7 904 465

## Beschreibung

Die Erfindung betrifft einen Schleuderstreuer für Streugut mit einem Streugut-Behälter, der ein sich zu einem Boden verjüngendes trichterförmiges Unterteil und wenigstens eine im Boden angeordnete Auslauföffnung aufweist, mit einer aus einer Dosieröffnung und einem Dosierschieber bestehenden Dosiereinrichtung und einer Verstelleinrichtung zur Verlagerung des Aufgabepunktes des Streuguts auf einer mit Wurfschaufeln besetzten Verteilerscheibe, die unterhalb des Bodens umläuft.

Ein bekannter Schleuderstreuer in Form eines Zweischeibenstreuers ist in der DE 41 34 315 A1 beschrieben. Bei diesem bekannten Streuer ist der Boden des Behälters zur Verstellung des Aufgabepunktes des Streugutes auf die Verteilerscheibe drehbar angeordnet und erfolgt die Mengenverstellung über mitgeführte Verstellsegmente. Die Aufgabepunkt-Verstellung geschieht ausschließlich über einen Aktuator. Eine manuelle Verstellung des drehbaren Behälterbodens ist nicht vorgesehen, weshalb auch eine Skala für die Aufgabepunkt-Verstellung fehlt. Die Verstelleinrichtung ist nahe der Verteilerscheibe angeordnet und dadurch dem Streugutstaubausgesetzt. Sie kann vom Bediener auch nur in gebückter Position erreicht und verstellt werden. Die Anbindung der Verstelleinrichtung an den Behälter ist korrosionsgefährdet. Die Behälter bestehen nämlich in der Regel aus lackiertem Blech. Selbst wenn die Verstelleinrichtung aus korrosionsfestem Material bestehen würde, käme es aufgrund der Reibung zwischen den einzelnen Teilen der Verstelleinrichtung und dem Behälterblech zum Abtragen des Lacks, was wiederum zu Korrosion führt. Schließlich kann Streugut in den Zwischenraum zwischen dem drehbaren Boden und dem Behälter gelangen und dadurch die Verstelleinrichtung blockieren und wiederum zu Korrosion führen.

Aus der DE 196 10 335 A1 ist ein ähnlicher Schleuderstreuer bekannt, bei dem allerdings der trichterförmige Behälter in einem zylindrischen Unterteil endet, der nach unten von einem Boden mit einer Auslauföffnung abgeschlossen ist. Der Boden ist von der Antriebswelle der Verteilerscheibe durchsetzt, die ein oberhalb des Bodens angeordnetes Rührwerk antreibt. Unterhalb der Bodenplatte sind eine Dosierplatte mit einer Dosieröffnung und darunter ein Dosierschieber drehbar angeordnet. Durch Verdrehen der Dosierplatte kann der Aufgabepunkt verstellt und durch Verdrehen des Dosierschiebers die Dosiermenge verändert werden. Die Einstellung und Festsetzung des Aufgabepunktes erfolgt mittels eines ausklinkbaren Steckbolzens, der an der Rückseite des Behälters in eine Platte eingreift. Dieser Steckbolzen ist bezüglich des Streuers von hinten relativ leicht zugänglich. Die Einstellung der Dosiermenge erfolgt mittels eines in einem konzentrischen Schlitz einer Skalenscheibe laufenden Bolzens mit einer Knebelschraube. Die Skalenscheibe ist im Raum zwischen dem zylindrischen Unterteil des Behältertrichters und dem Anbaurahmen des Schleuderstreuers angeordnet und damit nur sehr schwer zugänglich. Eine gleichzeitige Verstellung von Aufgabepunkt und Dosiermenge, die häufig miteinander korrelieren, ist nicht möglich, vielmehr muss der Benutzer stets einen Ortswechsel vornehmen und ist auch eine skalenmäßige Korrelation nicht möglich.

Bei einem anderen bekannten Zweischeibenstreuer (Prospekt "ACCORD" der Firma Kverneland, Druckvermerk AC 750762 GB 10/04) weist der Boden drei symmetrisch verteilte Auslauföffnungen auf und sitzt darunter ein Drehschieber mit drei Öffnungen, die blendenartig mit den Auslauföffnungen zusammenwirken. Der am Behälter drehbare Boden weist einen bis in das Zentrum der Verteilerscheibe reichenden zylindrischen Schirm auf, innerhalb dessen das Streugut auf die Verteilerscheibe gelangt. Der Schirm weist wenigstens eine seitliche Austrittöffnung auf. Durch Verdrehen des Schirms bzw. der Austrittöffnung wird der Aufgabepunkt verlagert. Zum Verstellen von Dosiermenge und Aufgabepunkt dient ein Bedienungspanel, das unterhalb des Bodens liegt und damit nur schwer zugänglich ist und zudem verspritzenden Düngerpartikeln ausgesetzt ist.

Es ist schließlich bei einem Zweischeibenstreuer bekannt (EP-A-0 329 072), im Boden jedes Streuguttrichters eine sektorförmige Auslauföffnung und zwei in der Trichterachse gelagerte sektorförmige Dosierschieber vorzusehen, deren einander zugekehrte Dosierkanten den freien Querschnitt der Auslauföffnung zur Einstellung der Dosiermenge steuern. Da bei Änderung der Dosiermenge der freie Dosierquerschnitt in Umfangsrichtung wandert, verlagert sich der Aufgabepunkt des Streugutes auf der Verteilerscheibe und damit die Streugutverteilung. Dieser sogenannte Mengeneffekt ist unerwünscht. Er wird bei dem bekannten Streuer durch eine Verstelleinrichtung ausgeglichen, die auf beide sektorförmige Dosierschieber wirkt und zugleich zur Einstellung der Dosiermenge wie auch zur Nachführung des Dosierquerschnitts durch Verlagerung des Aufgabepunktes dient. Eine Verstellung des Aufgabepunktes unabhängig von einer Änderung der Dosiermenge ist nicht möglich. Die Verstelleinrichtung wird vom Traktor aus mittels eines an einem senkrechten teilkreisförmigen Skalensegments geführten, in einer senkrechten Ebene bewegten Hebels bedient.

Der Erfindung liegt die Aufgabe zugrunde, für einen Schleuderstreuer mit rotationssymmetrischer Aufgabepunkt-Verstellung eine Verstelleinrichtung vorzuschlagen, die sich ergonomisch bedienen lässt, kostengünstig herstellbar und funktionssicher ist und bei der der Aufgabepunkt bei voreingestellter Dosiermenge verstellt oder gleichzeitig die Dosiermenge an einen veränderten Aufgabepunkt angepasst werden.

Diese Aufgabe wird erfindungsgemäß dadurch gelöst, dass der Boden eine großflächige Auslauföffnung aufweist und unter dem Boden die Dosiereinrichtung mit einer im wesentlichen horizontalen Dosierplatte mit einer gegenüber der Auslauföffnung des Bodens kleineren Dosieröffnung und dem darunter angeordneten Dosierschieber drehbar gelagert ist und die Verstelleinrichtung eine etwa trichterparallel verlaufende Konsole aufweist, die mit ihrem unteren Ende an der Dosierplatte der Dosiereinrichtung angreift und beim Verdrehen der Dosierplatte zur Verstellung des Aufgabepunkts den Dosierschieber mitnimmt und an ihrem oberen Ende ein nach außen weisendes, im wesentlichen horizontales Bedienungspanel für die Einstellung von Aufgabepunkt und Dosiermenge aufweist, und dass das Bedienungspanel mindestens 20 cm oberhalb des Bodens liegt.

Die Erfindung, die sowohl bei Ein- als auch bei Zweischeibenstreuern gleichermaßen vorteilhaft eingesetzt werden kann, ermöglicht mit der bis auf mindestens 20 cm oberhalb des Bodens bzw. mindestens 30 cm oberhalb der Verteilerscheibe nach oben gezogenen Konsole und dem an ihrem oberen Ende angeordneten, horizontalen Bedienungspanel in der Betriebsstellung des Streuers eine Bedienung im Stand. Die Bedienungsperson muss sich also bei Verstellung des Aufgabepunktes oder bei Änderung der Dosiermenge nicht nach unten bücken. Es ist ferner annähernd ausgeschlossen, dass die von der Verteilerscheibe erfassten und abgeschleuderten Streugutpartikel, die nach oben wegspritzen, das Bedienungspanel erreichen und in seiner Funktion beeinträchtigen. Durch die großflächige Auslauföffnung, die darunter im wesentlichen horizontal angeordnete kleinere Dosieröffnung in der drehbaren Dosierplatte lässt sich der Aufgabepunkt mittels der Verstelleinrichtung über einen weiten Winkelbereich einstellen. Durch die Mitnahme des Dosierschiebers kann die eingestellte Dosiermenge beibehalten werden. Umgekehrt kann die Dosiermenge durch den Dosierschieber variiert werden, ohne dass der Aufgabepunkt verändert wird.

Eine besonders stabile Ausführung ergibt sich, wenn die Konsole an ihrem oberen Ende über das Bedienungspanel an einem behälterfesten Teil abgestützt und geführt ist.

Gemäß einer bevorzugten Ausführungsform ist die Dosierplatte mittels eines ausgepressten Halses in einem ausgepressten Topf des Bodens von unten an diesem axial geführt.

Damit ist eine besonders einfache drehbare Lagerung der Dosierplatte in dem den Behälter nach unten abschließenden Boden verwirklicht.

In weiterhin bevorzugter Ausführung weist der Boden einen den Behälter überragenden Kragen und der Kragen einander gegenüberliegende Radien mit der Drehachse der Dosierplatte als Mittelpunkt auf, wobei die Dosierplatte mittels wenigstens drei Führungsstücken auf unterschiedlichen Radien des Kragens geführt ist.

Die Dosierplatte ist also einerseits axial in dem ausgepressten Topf des Bodens, andererseits axial und radial auf den Radien des Kragens des Bodens geführt, um auf diese Weise eine einwandfreie Drehbarkeit der Dosierplatte mit der Dosieröffnung und dem Dosierschieber mittels der Verstelleinrichtung zu gewährleisten.

Vorteilhafterweise ist die Dosierplatte außerhalb des ausgepressten Halses eben ausgebildet und wirkt mit dem gleichfalls mit Ausnahme des Topfs eben ausgebildeten Boden des Behälters zusammen. Der Boden und die Dosierplatte bestehen aus einem rostfreien Stahl.

In weiterhin vorteilhafter Ausführung ist die Dosierplatte mit mehreren Aussparungen versehen, durch die zwischen ihr und den Boden eindringendes Streugut nach unten durchfallen kann und somit nicht die freie Drehbarkeit der Dosierplatte gegenüber der Bodenplatte des Behälters behindert.

Für die Verstellung des Aufgabepunktes ist vorzugsweise eine Skala vorgesehen, die am Behälter angebracht ist.

Auf diese Weise werden bewegliche Verbindungen zwischen dem Behälter und der Verstelleinrichtung, die zu Verschleiß am Behälter und zur Korrosion führen können, vermieden.

In weiterhin vorteilhafter Ausführung ist vorgesehen, dass die Skala für die Verstellung des Aufgabepunktes einen Radius von mindestens 30 cm - bezogen auf die Drehachse der Dosierplatte - aufweist. Damit wird der Höhe des Bedienungspanels gegenüber der Verteilerscheibe Rechnung getragen.

Vorteilhafterweise ist die Verstelleinrichtung innen an der behälterfesten Skala axial und radial geführt. Hierzu kann sie zwei beabstandete Führungsstücke aufweisen.

Die behälterfeste Skala bildet damit eine obere Stütz- und Führungseinrichtung für die Verstelleinrichtung.

In bevorzugter Ausführung ist vorgesehen, dass die Fixierung des Bedienungspanels mittels einer daran angebrachten Blattfeder und einem an deren freien Ende angebrachten Rastnocken erfolgt, der in Aussparungen einer behälterfesten Rastschiene eingreift, wobei zum Verstellen des Aufgabepunktes der Rastnocken durch Drücken der Blattfeder entrastet wird und nach Erreichen der neuen Position selbsttätig wieder einrastet. Damit ergibt sich eine besonders einfache und funktionssichere Verstellbarkeit.

Zur Justierung der Verstelleinrichtung für den Aufgabepunkt ist die Lage der Blattfeder mit Bezug auf die Aussparungen der Rastschiene einstellbar.

Die Skala für die Einstellung des Aufgabepunktes ist an der Außenseite der behälterfesten Rastschiene angebracht. Sie ist vorzugsweise zur besseren Ablesbarkeit geneigt angeordnet. Auf der Rastschiene bzw. einer Flanschleiste derselben laufen die Führungsstücke der Verstelleinrichtung, wobei die Führungsstücke am Bedienungspanel auf der der Skala abgekehrten Seite befestigt sind.

In weiterhin vorteilhafter Ausbildung ist an der Dosierplatte ein fernbedienter Antrieb für die Betätigung des Dosierschiebers angebracht. Hierbei kann es sich um einen mechanischen, hydraulischen oder elektrischen Antrieb handeln und die Anordnung so getroffen sein, dass die Antriebe einfach gegeneinander austauschbar sind.

Mittels der Mengeneinstellung ist zweckmäßiger Weise ein Anschlag für eine vorwählbare Dosiermenge einstellbar, gegen den der Dosierschieber mittels des mechanischen oder hydraulischen Antriebs anläuft.

Die gewünschte Dosiermenge wird also mittels des Anschlags voreingestellt und der Dosierschieber gegen den Anschlag angefahren. Wird bei der eingestellten Dosiermenge die Verstellung des Aufgabepunktes gewünscht, wird die Verstelleinrichtung unter Mitführen der Dosierplatte und des Dosierschiebers entsprechend verstellt, so dass auch bei verlagertem Aufgabepunkt dieselbe Dosiermenge austritt. Bei einem elektrischen Antrieb entfällt die Anschlag-Positionierung. Selbstverständlich kann bei verstelltem Aufgabepunkt auch die Dosierung bei Bedarf verändert werden.

Für die Mengeneinstellung ist ein mehrfach abgekröpfter Hebel vorgesehen, der an seinem unteren Ende an der Dosierplatte gelagert und mit einem Bolzen in einem bogenförmigen Schlitz der Dosierplatte und mit seinem oberen Ende mit einem Bolzen in einem bogenförmigen Schlitz des Bedienungspanels geführt ist.

Der mehrfach abgekröpfte Hebel gleicht die Höhendifferenz und den seitlichen Versatz zwischen Dosierplatte und Bedienungspanel aus.

Vorteilhafterweise bildet der Bolzen am unteren Ende des mehrfach abgekröpften Hebels den Ansschlag für den mechanischen oder hydraulischen Antrieb. Der Bolzen am oberen Ende des mehrfach abgekröpften Hebels wirkt mit einem Knebelgriff zusammen, der oberhalb des Bedienungspanels angeordnet ist und zur Einstellung der vorwählbaren Dosiermenge dient.

Mit Vorteil ist dem bogenförmigen Schlitz im Bedienungspanel eine konturengleiche Skala für die Mengeneinstellung zugeordnet, die zur besseren Ablesbarkeit geneigt ist. Dabei dient der Knebelgriff als Anzeiger für die einstellbare Dosiermenge, indem er zweiteilig ausgebildet ist und das untere drehfeste Teil den Anzeiger bildet.

Vorzugsweise sind die Skalen für die Einstellung des Aufgabepunktes und die Einstellung der Dosiermenge unter gleichen Winkeln geneigt. Der Schlitz für die Mengeneinstellung und die zugehörige Skala weisen einen Bogen mit größerem Radius als der auf dem Bedienungspanel weiter innen liegenden Schlitz für die Verstellung des Aufgabepunktes auf, um eine feinere Mengenskalierung zu ermöglichen.

Zum Betätigen des Rastnockens ist vorzugsweise ein das Bedienungspanel nach oben durchsetzender Betätigungsknopf vorgesehen, der nahe dem freien Ende der Blattfeder befestigt ist. Der Knopf ist zugleich als Anzeiger für die Skala für die Vorstellung des Aufgabepunktes ausgebildet.

Es ist von Vorteil, wenn der Bedienungspanel an seinen gegenüberliegenden Schmalseiten Handgriffe oder Griffwulste aus Kunststoff aufweist, die ein beidhändiges Verstellen der Verstelleinrichtung ermöglichen.

Eine ergonomisch günstige Ausführung ergibt sich insbesondere dann, wenn der Betätigungsknopf an der Blattfeder im Griffbereich des Daumens liegt, wenn mit der entsprechenden Hand der Handgriff bzw. Griffwulst ergriffen wird, so dass durch Drücken des Betätigungsknopfs der Rastnocken einrastet und zugleich das Bedienungspanel gedreht werden kann, bis die gewünschte Aufgabepunkt-Stellung erreicht ist. Der Betätigungsknopf wird dann wieder freigegeben und der Rastnocken in die entsprechende Ausnehmung der Rastschiene eingerastet.

Die Dosierplatte ist vorzugsweise um mindestens 35° drehbar, und zwar derart, dass die Dosieröffnung oberhalb und neben die Antriebselemente der Verteilerscheibe gelangt, so dass nach Abnahme der Verteilerscheibe das Streugut neben den Antriebselementen behinderungsfrei nach unten durchfallen kann.

Ist der Schleuderstreuer als Zweischeibenstreuer ausgebildet, so ist jeweils links und rechts an den trichterförmigen Unterteilen der entsprechenden Trichterwand des Behälters eine von der Seite des Behälters her zugängliche Verstelleinrichtung angeordnet.

Nachstehend ist die Erfindung anhand eines in der Zeichnung wiedergegebenen Ausführungsbeispiels beschrieben. In der Zeichnung zeigen:
- Fig. 1: eine perspektivische Ansicht auf die Rückseite eines Zweischeibenstreuers, wobei die Verstelleinrichtung nur auf der linken Behälterseite wiedergegeben ist;
- Fig. 2: eine perspektivische Ansicht von oben in den Behälter des Zweischeibenstreuers gemäß Figur 1 von der schlepperseitigen Frontseite;
- Fig. 3: eine perspektivische Ansicht von oben in das Bodenteil des Behälters in vergrößertem Maßstab;
- Fig. 4: eine perspektivische Ansicht auf die Oberseite der Dosierplatte und die Innenseite der Verstelleinrichtung, von der Seite des Behälters (nicht gezeigt) her gesehen, in gegenüber Fig. 3 verkleinertem Maßstab, und
- Fig. 5: eine perspektivische Ansicht auf die Unterseite der Dosierplatte und der Verstelleinrichtung gemäß Fig. 4.

In der Zeichnung ist als Ausführungsbeispiel ein Schleuderstreuer als Zweischeibenstreuer gezeigt, jedoch lässt sich die Erfindung gleichermaßen auf einen Einscheibenstreuer übertragen.

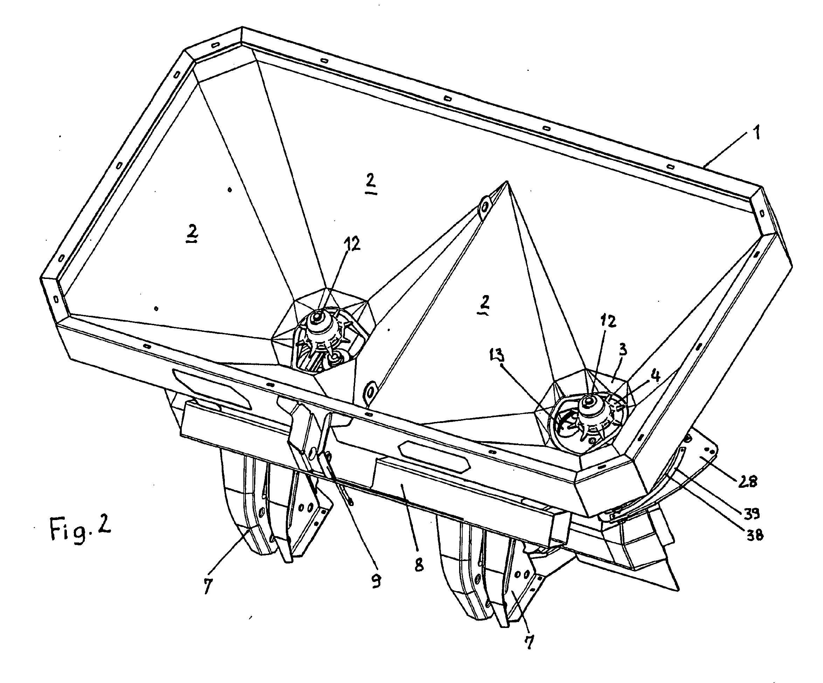

Der Schleuderstreuer weist einen Behälter 1 auf, der sich über je ein trichterförmiges Unterteil 2 zu einem Bodenteil 3 mit einem Boden 4 verjüngt. Der Behälter 1 ist von einem Rahmen aufgenommen, der aus zwei in Fahrtrichtung nach hinten weisenden Kragarmen 5, einer Mittelkonsole 6 und zwei Seitenkonsolen 7 (Figur 2) und einer dieser verbindenden Quertraverse 8 besteht. An den Seitenkonsolen 7 befinden sich die Anschlüsse für die Unterlenker und an der Quertraverse 8 der Anschluss 9 für den Oberlenker des Dreipunktgestänges eines Traktors.

Die Kragarme 5 sind über eine Quertraverse 10 verbunden, die zugleich das Gehäuse für ein Getriebe mit einer Querwelle aufnimmt, das eingangsseitig an die Zapfwelle eines Traktors anschließbar ist und über endständige Naben 11 je eine nicht gezeigte Verteilerscheibe antreibt, die an ihrer Oberseite mit Wurfschaufeln besetzt sind.

Unmittelbar oberhalb des Bodens 4 des Streugutbehälters 1 ist ein sich etwa über die Höhe den Bodenteils 3 erstreckendes Rührwerk 12 angeordnet, das den im Streugut-Behälter befindlichen Dünger insbesondere nahe der Auslauföffnung 13 auflockert, um ein einwandfreies Abfließen des Düngers zu gewährleisten (Figur 2).

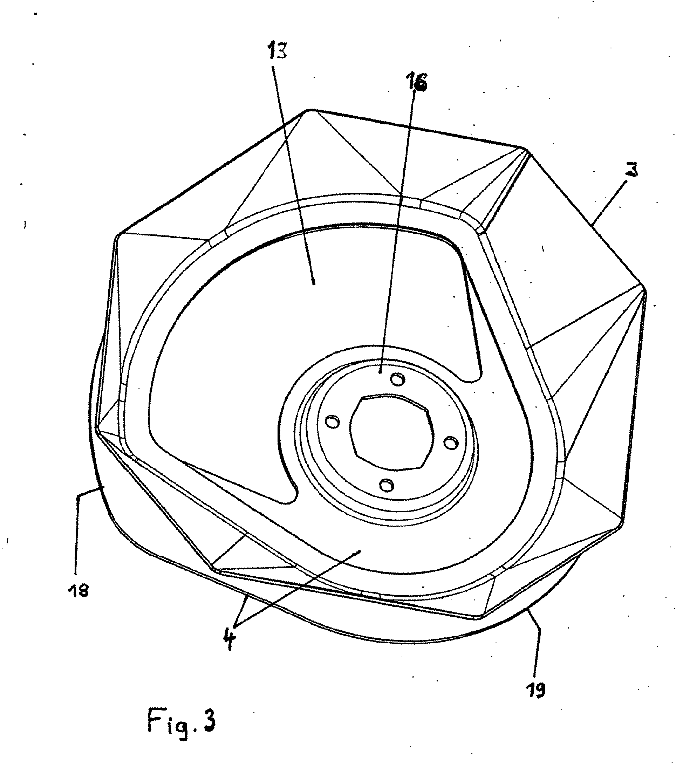

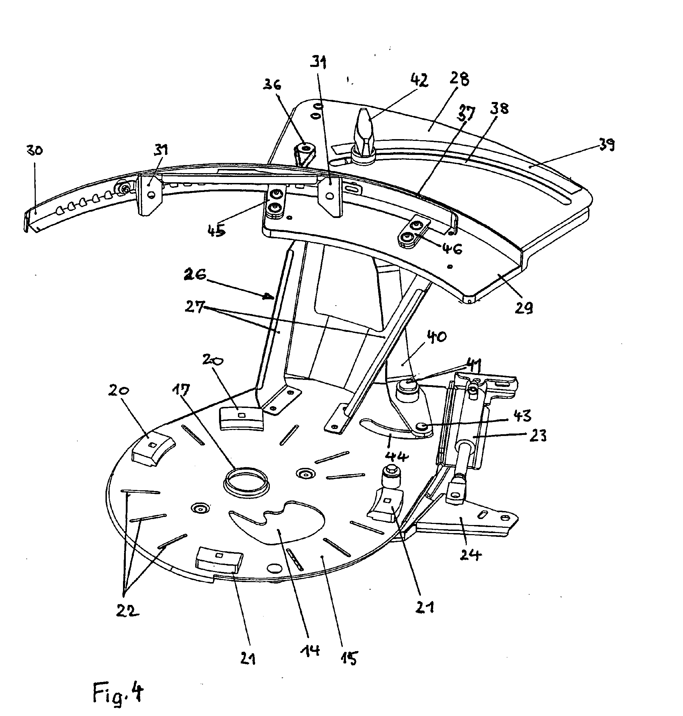

Jeder Boden 4 weist eine großflächige Auslauföffnung 13 (Fig. 3) für den Dünger auf, deren Querschnitt so bemessen ist, dass in Verbindung mit der später beschriebenen Dosiereinrichtung bei jeder Lage des Aufgabepunktes die größte Dosiermenge ausgebracht werden kann. Die Auslauföffnung 13 (Figur 3) wirkt mit einer Dosieröffnung 14 in einer Dosierplatte 15 (Fig. 4) zusammen, die unterhalb des Bodens angeordnet und an diesem drehbar geführt ist. Zu diesem Zweck weist der Boden 4 einen nach innen eingepressten Topf 16 und die Dosierplatte (Figur 4) einen nach oben ausgepressten Hals 17 auf, der in den Topf 16 von der Unterseite her eingreift und mit diesem eine Art Lager bildet. Ferner weist der Boden 4 an seinem das Bodenteil 3 überragenden Kragen einen großen Radius 18 und einen kleineren Radius 19 auf (Figur 3). Im Bereich des kleinen Radius 19 wird der Boden von zwei Führungsstücken 20 und im Bereich des großen Radius 18 von zwei Führungsstücken 21, die jeweils auf der Oberseite der Dosierplatte 15 befestigt sind, übergriffen. Durch diesen Übergriff ist die Dosierplatte 15 in Verbindung mit dem Eingriff des Halses 17 in den Topf 16 des Bodens 4 axial und radial geführt. Die Dosierplatte 15 weist mehrere Ausnehmungen in Form von Schlitzen 22 auf, durch die eventuell zwischen den Boden 4 und die Dosierplatte 15 eindringendes Streugut nach unten durchfallen kann. Im übrigen bestehen der Boden 4 und die Dosierplatte 15 aus einem korrosionsfestem Stahl.

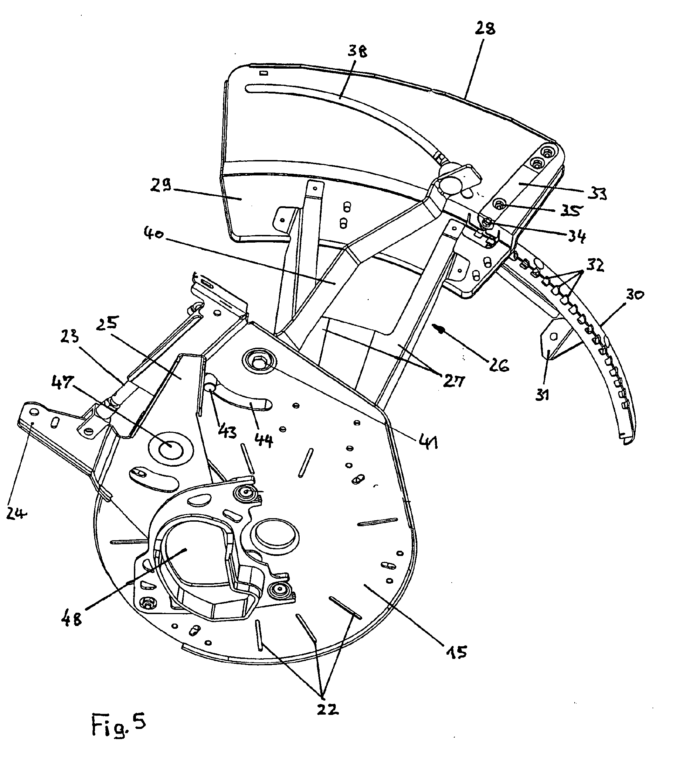

Zu der Dosiereinrichtung mit der Dosieröffnung 14 in der Dosierplatte 15 gehört ferner ein Dosierschieber 48, der auf der Unterseite der Dosierplatte 15 (Figur 5) bei 47 schwenkbar gelagert ist. Er wird beispielsweise von einem Hydraulikzylinder 23, betätigt, der auf einen mit dem Dosierschieber 48 verbundenen Arm 24 wirkt. Ein weiterer Arm 25 wirkt als Anschlagelement für eine vorwählbare Dosiermenge, wie später beschrieben. Der Hydraulikzylinder ist an seinen Enden leicht auswechselbar angebracht, um gegen einen anderen Antrieb, z.B. einen Pneumatik- oder einen Elektrozylinder einfach ausgetauscht werden zu können.

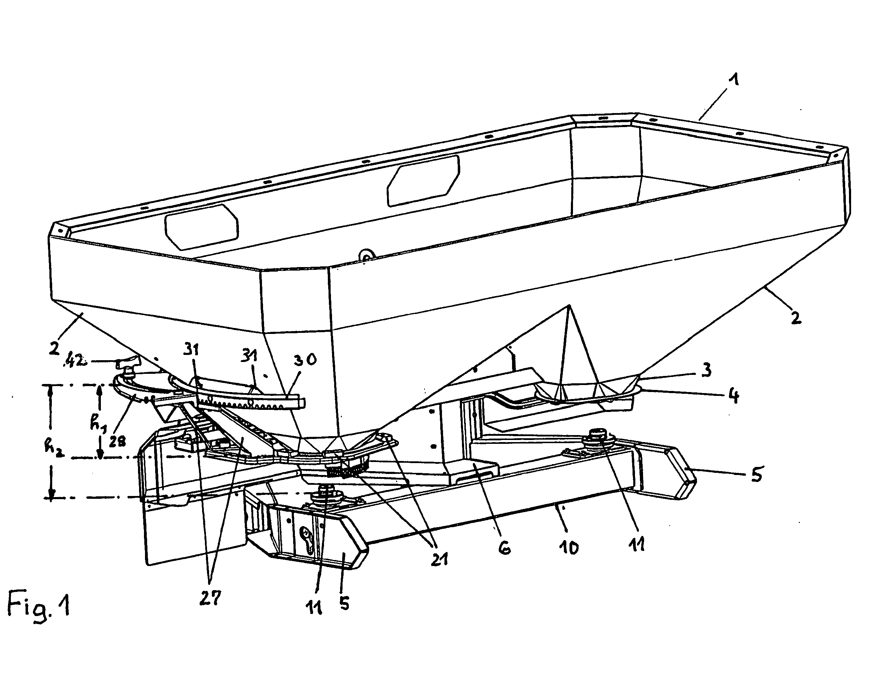

Die Baueinheit aus Dosierplatte 15 und Dosiereinrichtung 14, 48 ist zur Verlagerung des Aufgabepunktes des Streugutes auf die Verteilerscheibe, die durch Verdrehen der Dosieröffnung 14 mit dem Dosierschieber 48 um die Achse des Halses 17 der Dosierplatte 15 erfolgt, mittels der Verstelleinrichtung 26 möglich. Die Verstelleinrichtung 26 weist eine Konsole 27 auf, die, wie aus Figur 1 ersichtlich etwa trichterparallel verläuft, und aus zwei, sich nach oben etwas spreizenden Armen besteht. Die Verstelleinrichtung weist ferner ein Bedienungspanel 28 auf, das an der Konsole 27 befestigt ist und sich im wesentlichen horizontal nach außen erstreckt. Das Bedienungspanel 28 weist einen nach innen weisenden Abschnitt 29 auf, mittels dessen es an den Armen der Konsole 27 befestigt ist.

Zu der Verstelleinrichtung gehört ferner eine behälterfeste Rastschiene 30, die über Laschen 31 an der Außenwand des trichterförmigen Unterteils 2 des Behälters 1 befestigt ist. Das Bedienungspanel 28 weist an seinem Abschnitt 29 befestigte Führungsstücke 45, 46 auf, die einen Seitenflansch der Rastschiene übergreifen und die Drehbewegung der Verstelleinrichtung 26 gegenüber der behälterfesten Rastschiene 38 führen. Zugleich erfüllen sie eine obere Stützfunktion.

Die Rastschiene 30 weist auf Abstand angeordnete Ausnehmungen 32 auf. Ferner ist an der Unterseite des Bedienungspanels eine in ihrer Lage einstellbare Blattfeder 33 angeordnet die an ihrem abgebogenen freien Ende einen Rastnocken 34 aufweist, der mit den Ausnehmungen 32 der Rastschiene 30 zusammenwirkt. Der Rastnocken 34 lässt sich mit einem an dem Lager 35 an der Blattfeder befestigten und das Bedienungspanel 28 nach oben durchgreifenden Druckknopf 36 mit einem Anzeiger betätigen. Bei Drücken des Betätigungsknopfs 36 rastet der Nocken 34 aus der entsprechenden Ausnehmung der Rastschiene 30 aus und kann das Bedienungspanel 28 entlang der Rastschiene gedreht werden. Wird der Betätigungsknopf 36 bei Erreichen einer auf der Skala 37 an der Außenseite der Rastschiene angezeigten Markierung wieder losgelassen, so rastet der Nocken 34 wiederum ein. Auf diese Weise wird der Aufgabepunkt verstellt, in dem beim Drehen des Bedienungspanels 28 über die Konsole 27 die Dosierplatte mit der Dosiereinrichtung um die Achse des Halses 17 verdreht wird. In der Zeichnung nicht dargestellt sind an den gegenüberliegenden Schmalseiten des Bedienungspanels 28 angeordnete Handgriffe oder Griffwulste aus Kunststoff, die das Bedienen der Verstelleinrichtung erleichtern. Der Betätigungsknopf 36 sitzt nahe der einen Schmalseite des Bedienungspanels 28, und zwar im Griffbereich des Daumens der den dort befindlichen Handgriff oder Griffwulst umgreifenden Hand.

Das Bedienungspanel 28 weist ferner einen bogenförmigen Schlitz 38 mit größerem Radius mit einer Skala 39 zur Einstellung der Dosiermenge auf. Zu diesem Zweck weist die Verstelleinrichtung einen mehrfach abgekröpften Hebel 40 auf, der mit seinem unteren Ende bei 40 an der Dosierplatte 15 gelagert ist und an seinem oberen Ende über einen Bolzen das Bedienungspanel 28 durchgreift und dort mit einem Knebelgriff 42 versehen ist. Mit Hilfe des Knebelgriff 42 kann der mehrfach abgekröpfte Hebel 40 um das Lager 41 verdreht werden, bis die gewünschte Dosiermenge an der Skala 39 eingestellt ist. Die Skalen 37 und 39 sind entgegen der zeichnerischen Darstellung geneigt angeordnet, um der Bedienungsperson die Einstellung zu erleichtern.

Der mehrfach abgekröpfte Hebel 40 weist an seinem äußeren unteren Bereich jenseits des Lagers 41 einen Bolzen 43 auf, der einen kreisbogenförmigen Schlitz 44 in der Dosierplatte 15 nach unten durchgreift und als Anschlag für die vorwählbar eingestellte Dosiermenge dient. In der Anschlagposition wirkt das Anschlagelement 25 (Figur 5) der Dosiereinrichtung mit dem Bolzen 43 der Einstelleinrichtung zusammen.

Der Antrieb des Dosierschiebers kann nicht nur mittels eines Hydraulikzylinders 23, sondern gleichermaßen pneumatisch oder elektrisch erfolgen, wobei im Falle eines elektrischen Antriebs eine Positionierung des Bolzens 43 bzw. eine Voreinstellung der Dosiermenge mittels des Knebelgriffs 42 nicht erforderlich ist, da sich ein Elektrozylinder steuerungstechnisch exakt positionieren lässt.

Das Bedienungspanel 28 der Verstelleinrichtung 26 ist vorzugsweise in einer Höhe h₁ ≥ 20 cm oberhalb des Bodens 4 oder in einer Höhe h₂ ≥ 30 cm oberhalb der Verteilerscheibe angeordnet (Figur 1).

## Patentansprüche

1. Schleuderstreuer für Streugut mit einem Streugut-Behälter (1), der ein sich zu einem Boden (4) verjüngendes trichterförmiges Unterteil (2) und wenigstens eine im Boden (4) angeordnete Auslauföffnung aufweist, mit einer aus einer Dosieröffnung (14) und einem Dosierschieber (48) bestehenden Dosiereinrichtung (15, 23, 24, 25) und einer Verstelleinrichtung (26) zur Verlagerung des Aufgabepunktes des Streuguts auf einer mit Wurfschaufeln besetzten Verteilerscheibe, die unterhalb des Bodens (4) umläuft, **dadurch gekennzeichnet, dass** der Boden (4) eine großflächige Auslauföffnung (13) aufweist und unter dem Boden (4) die Dosiereinrichtung mit einer im wesentlichen horizontalen Dosierplatte (15) mit einer gegenüber der Auslauföffnung (13) des Bodens (4) kleineren Dosieröffnung (14) und dem darunter angeordneten Dosierschieber drehbar gelagert ist und die Verstelleinrichtung (26) eine etwa trichterparallel verlaufende Konsole (27) aufweist, die mit ihrem unteren Ende an der Dosierplatte (15) der Dosiereinrichtung (14, 15, 23, 24, 25) angreift und beim Verdrehen der Dosierplatte zur Verstellung des Aufgabepunkts den Dosierschieber (48) mitnimmt und an ihrem oberen Ende ein nach außen weisendes, im wesentlichen horizontales Bedienungspanel (28) für die Einstellung von Aufgabepunkt und Dosiermenge aufweist, und dass das Bedienungspanel (28) mindestens 20 cm oberhalb des Bodens (4) liegt.

2. Schleuderstreuer nach Anspruch 1, **dadurch gekennzeichnet, dass** das Bedienungspanel (28) mindestens 30 cm oberhalb der Verteilerscheibe liegt.

3. Schleuderstreuer nach Anspruch 1 oder 2, **dadurch gekennzeichnet, dass** die Konsole (27) an ihrem oberen Ende über das Bedienungspanel (28) an einem behälterfesten Teil (30) abgestützt und geführt ist.

4. Schleuderstreuer nach Anspruch 1, **dadurch gekennzeichnet, dass** die Dosierplatte (15) mittels eines ausgepressten Halses (17) in einem ausgepressten Topf (14) des Bodens (4) des Behälters (1) von unten in diesem axial geführt ist.

5. Schleuderstreuer nach einem der Ansprüche 1 bis 4, **dadurch gekennzeichnet, dass** der Boden (4) einen den Behälter (1) an einem Bodenteil (13) überragenden Kragen und der Kragen einander gegenüberliegende unterschiedliche Radien (18, 19) mit der Drehachse der Dosierplatte (15) als Mittelpunkt aufweist, und dass die Dosierplatte (15) mittels wenigstens drei Führungsstücken (20, 21) auf unterschiedlichen Radien (19,18) des Kragens geführt ist.

6. Schleuderstreuer nach Anspruch 4, **dadurch gekennzeichnet, dass** die Dosierplatte (15) außerhalb des ausgepressten Halses (17) eben ausgebildet ist.

7. Schleuderstreuer nach Anspruch 1, **dadurch gekennzeichnet, dass** die Dosierplatte (15) mit mehreren Aussparungen (22) versehen ist, durch die zwischen ihr und den Boden eindringendes Streugut nach unten durchfallen kann.

8. Schleuderstreuer nach einem der Ansprüche 1 bis 7, **dadurch gekennzeichnet, dass** für die Verstellung des Aufgabepunktes eine Skala (37) vorgesehen ist, die am Behälter (1) angebracht ist.

9. Schleuderstreuer nach Anspruch 8, **dadurch gekennzeichnet, dass** die Skala (37) für die Verstellung des Aufgabepunktes einen Radius von mindestens 30 cm bezogen auf die Drehachse der Dosierplatte (15) aufweist.

10. Schleuderstreuer nach Anspruch 8 oder 9, **dadurch gekennzeichnet, dass** die Verstelleinrichtung (26) innen an der behälterfesten Skala (37) geführt ist.

11. Schleuderstreuer nach Anspruch 10, **dadurch gekennzeichnet, dass** die Verstelleinrichtung (26) in ihrem oberen Bereich wenigstens zwei beabstandete Führungsstücke (45, 46) aufweist, mittels denen sie an der behälterfesten Skala geführt ist.

12. Schleuderstreuer nach einem der Ansprüche 1 bis 10, **dadurch gekennzeichnet, dass** die Fixierung des Bedienungspanels (28) mittels einer an deren einem Ende angebrachten Blattfeder (33) und einem an deren freiem angebrachten Rastnocken (37) erfolgt, der in Aussparungen (32) einer behälterfesten Rastschiene (30) eingreift, und dass zum Verstellen des Aufgabepunktes der Rastnocken (34) durch Drücken der Blattfeder (33) entrastet wird und nach Erreichen der neuen Position selbsttätig wieder einrastet.

13. Schleuderstreuer nach Anspruch 12, **dadurch gekennzeichnet, dass** die Lager (35) der Blattfeder (33) mit Bezug auf die Aussparungen (32) der Rastschiene (30) zur Justierung der Verstelleinrichtung (26) einstellbar ist.

14. Schleuderstreuer nach einem der Ansprüche 8 bis 12, **dadurch gekennzeichnet, dass** die Skala (37) für die Einstellung des Aufgabepunktes an der Außenseite der behälterfesten Rastschiene (30) angebracht ist.

15. Schleuderstreuer nach Anspruch 1, **dadurch gekennzeichnet, dass** an der Dosierplatte (15) ein fernbedienter Antrieb (23) für die Betätigung des Dosierschiebers (48) angebracht ist.

16. Schleuderstreuer nach Anspruch 15, **dadurch gekennzeichnet, dass** der fernbediente Antrieb mechanisch, hydraulisch (23) oder elektrisch ausgebildet ist.

17. Schleuderstreuer nach Anspruch 16, **dadurch gekennzeichnet, dass** die Antriebe einfach gegeneinander austauschbar sind.

18. Schleuderstreuer nach einem der Ansprüche 15 bis 17, **dadurch gekennzeichnet, dass** mittels der Mengeneinstellung ein Anschlag (43) für eine vorwählbare Dosiermenge einstellbar ist, gegen den der Dosierschieber mittels des mechanischen oder hydraulischen Antriebs (23) anläuft.

19. Schleuderstreuer nach einem der Ansprüche 1 bis 18, **dadurch gekennzeichnet, dass** für die Mengeneinstellung ein mehrfach abgekröpfter Hebel (40) vorgesehen ist, der im Bereich seines unteren Endes an der Dosierplatte (15) gelagert (41) und mit einem Bolzen (43) in einem bogenförmigen Schlitz (44) in der Dosierplatte und mit seinem oberen Ende mit einem Bolzen in einem bogenförmigen Schlitz (38) in dem Bedienungspanel (28) geführt ist.

20. Schleuderstreuer nach Anspruch 19, **dadurch gekennzeichnet, dass** der mehrfach abgekröpfte Hebel (40) die Höhendifferenz und den seitlichen Versatz zwischen Dosierplatte (15) und Bedienungspanel (28) ausgleicht.

21. Schleuderstreuer nach Anspruch 15 und 19, **dadurch gekennzeichnet, dass** der in dem bogenförmigen Schlitz (44) der Dosierplatte (15) geführte Bolzen (43) den Anschlag für den mechanischen oder hydraulischen Antrieb (23) bei der voreingestellten Dosiermenge bildet.

22. Schleuderstreuer nach einem der Ansprüche 19 bis 21, **dadurch gekennzeichnet dass** der in dem bogenförmigen Schlitz (38) des Bedienungspanels (28) geführte Bolzen einen Knebelgriff (42) zur Einstellung der vorwählbaren Dosiermenge aufweist.

23. Schleuderstreuer nach einem der Ansprüche 19 bis 23, **dadurch gekennzeichnet, dass** dem bogenförmigen Schlitz (38) in dem Bedienungspanel (28) eine konturengleiche Mengenskala (39) zugeordnet ist.

24. Schleuderstreuer nach einem der Ansprüche 8 und 19 bis 23, **dadurch gekennzeichnet, dass** die Mengenskala (39) unter gleichem Winkel geneigt ist wie die Aufgabepunkt-Skala (37) .

25. Schleuderstreuer nach einem der Ansprüche 13 bis 25, **dadurch gekennzeichnet, dass** dem Rastnocken (34) ein das Bedienungspanel (28) durchgreifender Betätigungsknopf (36) zugeordnet ist, der nahe dem freien Ende der Blattfeder (33) angeordnet ist.

26. Schleuderstreuer nach Anspruch 25, **dadurch gekennzeichnet, dass** der Betätigungsknopf (36) einen auf die Aufgabepunkt-Skala (37) weisenden Anzeiger aufweist.

27. Schleuderstreuer nach einem der Ansprüche 1 bis 26, **dadurch gekennzeichnet, dass** das Bedienungspanel (28) an seinen beiden gegenüberliegenden Schmalseiten Handgriffe oder Griffwulste aus Kunststoff aufweist.

28. Schleuderstreuer nach einem der Ansprüche 25 bis 27, **dadurch gekennzeichnet, dass** der Betätigungsknopf (36) im Griffbereich des Daumens der den einen Handgriff oder Griffwulst des Bedienungspanels (28) umgreifenden Hand liegt.

29. Schleuderstreuer nach Anspruch 1, **dadurch gekennzeichnet, dass** die Dosierplatte (15) um mindestens 35° drehbar ist.

30. Schleuderstreuer nach Anspruch 1 oder 29, **dadurch gekennzeichnet, dass** die Dosierplatte (15) derart verdrehbar ist, dass die Dosieröffnung (14) oberhalb und neben die Antriebselemente der Verteilerscheibe gelangt, so dass nach Abnehmen der Verteilerscheibe das Streugut neben den Antriebselementen behinderungsfrei nach unten durchfallen kann.

31. Schleuderstreuer als Zweischeibenstreuer mit zwei Verteilerscheiben, **dadurch gekennzeichnet, dass** jeweils links und rechts an den trichterförmigen Unterteilen (2) der entsprechenden Trichterwand des Behälters (1) eine von der Seite des Behälters her zugängliche Verstelleinrichtung (26) nach einem der Ansprüche 1 bis 30 angeordnet ist.

## Claims

1. Centrifugal spreader for spreading material having a spreading material container (1), which has a funnel-shaped lower part (2) tapering to a base (4) and at least one discharge opening located in said base (4), with a dosing device (15, 23, 24, 25) comprising a dosing opening (14) and a flow regulator (48), and an adjusting device (26) for displacing the delivery point of the spreading material on a distributor plate equipped with spreading blades, said plate revolving below the base (4), **characterized in that** the base (4) has a large-area discharge opening (13) and below the base (4) the dosing device is mounted in rotary manner with a substantially horizontal dosing plate (15) with a dosing opening (14) smaller than the discharge opening (13) of the base (4) and the flow regulator positioned below the same, and the adjusting device (26) has a roughly funnel-parallel bracket (27), whose lower end engages on the dosing plate (15) of dosing device (14, 15, 23, 24, 25) and on rotating the dosing plate for adjusting the delivery point entrains the flow regulator (48) and on its upper end has an outwardly pointing, substantially horizontal control panel (28) for adjusting the delivery point and dosing quantity, and that the control panel (28) is at least 20 cm above the base (4).

2. Centrifugal spreader according to claim 1, **characterized in that** the control panel (28) is at least 30 cm above the distributor plate.

3. Centrifugal spreader according to claim 1 or 2, **characterized in that** the upper end of the bracket (27) is supported and guided on a container-fixed part (30) by means of control panel (28).

4. Centrifugal spreader according to claim 1, **characterized in that** the dosing plate (15) is axially guided by means of a pressed out neck (17) from below in a pressed out pot (14) of the base (4) of container (1).

5. Centrifugal spreader according to one of the claims 1 to 4, **characterized in that** the base (4) has a collar projecting over container (1) at a base part (13) and the collar has facing, differing radii (18, 19) with the rotation axis of dosing plate (15) as the centre point, and that the dosing plate (15) is guided by means of at least three guide pieces (20, 21) on different radii (19, 18).

6. Centrifugal spreader according to claim 4, **characterized in that** outside the pressed out neck (17) the dosing plate (15) is planar.

7. Centrifugal spreader according to claim 1, **characterized in that** dosing plate (15) is provided with several recesses (22) through which drop downwards the spreading material penetrating between said plate and the base.

8. Centrifugal spreader according to one of the claims 1 to 7, **characterized in that** a scale (37) fitted to container (1) is provided for adjusting the delivery point.

9. Centrifugal spreader according to claim 8, **characterized in that** the scale (37) for adjusting the delivery point has a radius of at least 30 cm relative to the rotation axis of dosing plate (15).

10. Centrifugal spreader according to claim 8 or 9, **characterized in that** the adjusting device (26) is guided inside on the container-fixed scale (37).

11. Centrifugal spreader according to claim 10, **characterized in that** in its upper area the adjusting device (26) has at least two spaced guide pieces (45, 46) by means of which guiding thereof takes place on the container-fixed scale.

12. Centrifugal spreader according to one of the claims 1 to 10, **characterized in that** the control panel (28) is fixed by means of a leaf spring (33) fitted to its one end and a locking cam (37) fitted to its free end and which engages in recesses (32) of a container-fixed locking rail (30), and that for adjusting the delivery point the locking cam (34) is disengaged by pressing leaf spring (33) and is automatically reengaged on reaching the new position.

13. Centrifugal spreader according to claim 12, **characterized in that** the bearing (35) of leaf spring (33) with respect to the recesses (32) of locking rail (30) can be adjusted for setting the adjusting device (26).

14. Centrifugal spreader according to one of the claims 8 to 12, **characterized in that** the scale (37) for adjusting the delivery point is fitted to the outside of the container-fixed locking rail (30).

15. Centrifugal spreader according to claim 1, **characterized in that** a remotely controlled drive (23) for operating the flow regulator (48) is fitted to dosing plate (15).

16. Centrifugal spreader according to claim 15, **characterized in that** the remotely controlled drive is constructed mechanically, hydraulically (23) or electrically.

17. Centrifugal spreader according to claim 16, **characterized in that** the drives are easily mutually replaceable.

18. Centrifugal spreader according to one of the claims 15 to 17, **characterized in that** by means of the quantity adjustment it is possible to adjust a stop (43) for a preselectable dosing quantity against which the flow regulator runs by means of the mechanical or hydraulic drive (23).

19. Centrifugal spreader according to one of the claims 1 to 18, **characterized in that** for quantity adjustment a multiply bent lever (40) is provided, which is mounted (41) in the vicinity of its lower end on the dosing plate (15) and is guided with a bolt (43) in an arcuate slot (44) in the dosing plate and with its upper end with a bolt in an arcuate slot (38) in control panel (28).

20. Centrifugal spreader according to claim 19, **characterized in that** the multiply bent lever (40) compensates the height difference and lateral displacement between dosing plate (15) and control panel (28).

21. Centrifugal spreader according to claims 15 and 19, **characterized in that** the bolt (43) guided in the arcuate slot (44) of dosing plate (15) forms the stop for the mechanical or hydraulic drive (23) at the preset dosing quantity.

22. Centrifugal spreader according to one of the claims 19 to 21, **characterized in that** the bolt guided in the arcuate slot (38) of control panel (28) has a locking handle (42) for adjusting the preselectable dosing quantity.

23. Centrifugal spreader according to one of the claims 19 to 23, **characterized in that** with the arcuate slot (38) in control panel (28) is associated a conformal quantity scale (39).

24. Centrifugal spreader according to claims 8 and 19 to 23, **characterized in that** the quantity scale (39) is inclined by the same angle as the delivery point scale (37).

25. Centrifugal spreader according to one of the claims 13 to 25, **characterized in that** with the locking cam (34) is associated a pushbutton (36) passing through the control panel (28) and which is located close to the free end of leaf spring (33).

26. Centrifugal spreader according to claim 25, **characterized in that** the pushbutton (36) has a pointer pointing towards the delivery point scale (37).

27. Centrifugal spreader according to one of the claims 1 to 26, **characterized in that** on its two facing narrow sides the control panel (28) has plastic handles or gripping bulges.

28. Centrifugal spreader according to one of the claims 25 to 27, **characterized in that** the pushbutton (36) is located in the gripping area of the thumb of the hand embracing a handle or gripping bulge of control panel (28).

29. Centrifugal spreader according to claim 1, **characterized in that** dosing plate (15) can be rotated by at least 35°.

30. Centrifugal spreader according to claims 1 or 29, **characterized in that** dosing plate (15) is rotatable in such a way that dosing opening (14) passes above and alongside the drive elements of the distributor plate, so that following removal of the distributor plate the spreading material can drop downwards without hindrance alongside the drive elements.

31. Centrifugal spreader as a two-plate spreader with two distributor plates, **characterized in that** both to the left and right on the funnel-shaped lower parts (2) of the corresponding funnel wall of container (1) is provided an adjusting device (26), according to one of the claims 1 to 30, which is accessible from the side of the container.

## Revendications

1. Epandeur centrifuge pour matériau d'épandage comprenant un réservoir (1) pour matériau d'épandage présentant une partie inférieure (2) en forme de trémie qui se réduit vers un fond (4) et au moins une ouverture de sortie ménagée dans le fond (4), épandeur comprenant un dispositif de dosage (15, 23, 24, 25) consistant en une ouverture de dosage (14) et un tiroir de dosage (48), et un dispositif de réglage (26) permettant de déplacer le point d'alimentation du matériau d'épandage sur un disque répartiteur équipé de pelles de projection tournant en-dessous du fond (4), **caractérisé en ce que** le fond (4) présente une ouverture de sortie (13) à grande surface et **en ce que** sous le fond (4), le dispositif de dosage, qui comporte une plaque de dosage (15) sensiblement horizontale et présente une ouverture de dosage (14) plus petite que l'ouverture de sortie (13) du fond (4) et le tiroir de dosage disposé en-dessous, est monté pivotant, et **en ce que** le dispositif de réglage (26) présente une console (27) disposée sensiblement parallèle à la trémie, qui, par son extrémité inférieure, se trouve en liaison active avec la plaque de dosage (15) du dispositif de dosage (14, 15, 23, 24, 25) et qui entraîne le tiroir de dosage (48) lors du pivotement de la plaque de dosage pour le réglage du point d'alimentation, et qui, à son extrémité supérieure, présente un panneau de commande (28) sensiblement horizontal orienté vers l'extérieur pour le réglage du point d'alimentation et de la quantité de dosage, et **en ce que** le panneau de commande (28) est situé au moins 20 cm au-dessus du fond (4).

2. Epandeur centrifuge selon la revendication 1, **caractérisé en ce que** le panneau de commande (28) est situé au moins 30 cm au-dessus du disque répartiteur.

3. Epandeur centrifuge selon la revendication 1 ou 2, **caractérisé en ce que** la console (27) prend appui sur, et est guidée au niveau de son extrémité supérieure par le panneau de commande (28) par, un élément (30) fixé au réservoir.

4. Epandeur centrifuge selon la revendication 1, **caractérisé en ce que** la plaque de dosage (15) est guidée par le bas axialement dans le réservoir (1) au moyen d'une gorge (17) conformée par injection dans une cuvette (16) conformée par injection dans le fond (4) de celui-ci.

5. Epandeur centrifuge selon l'une quelconque des revendications 1 à 4, **caractérisé en ce que** le fond (4) présente un rebord faisant saillie au-delà du réservoir (1) au niveau d'une partie (13) du fond et que le rebord présente des rayons (18, 19) différents se faisant face, l'axe de rotation de la plaque de dosage (15) servant de centre, et **en ce que** la plaque de dosage (15) est guidée sur des rayons différents (19, 18) du rebord au moyen d'au moins trois pièces de guidage (20, 21).

6. Epandeur centrifuge selon la revendication 4, **caractérisé en ce que** la plaque de dosage (15) est conformée plane à l'extérieur de la gorge injectée (17).

7. Epandeur centrifuge selon la revendication 1, **caractérisé en ce que** la plaque de dosage (15) présente plusieurs rainures (22) par lesquelles du matériau d'épandage pénétrant entre elle et le fond peut s'évacuer vers le bas.

8. Epandeur centrifuge selon l'une quelconque des revendications 1 à 7, **caractérisé en ce que** pour le réglage du point d'alimentation, on prévoit une graduation (37) fixée au réservoir (1).

9. Epandeur centrifuge selon la revendication 8, **caractérisé en ce que** pour le réglage du point d'alimentation, la graduation (37) présente un rayon d'au moins 30 cm par rapport à l'axe de rotation de la plaque de dosage (15).

10. Epandeur centrifuge selon la revendication 8 ou 9, **caractérisé en ce que** le dispositif de réglage (26) est guidé à l'intérieur le long de la graduation (37) fixée au réservoir.

11. Epandeur centrifuge selon la revendication 10, **caractérisé en ce que** le dispositif de réglage (26) présente dans sa zone supérieure au moins deux pièces de guidage (45, 46) à distance l'une de l'autre, au moyen desquelles il est guidé sur la graduation fixée au réservoir.

12. Epandeur centrifuge selon l'une quelconque des revendications 1 à 10, **caractérisé en ce que** la fixation du panneau de commande (28) s'effectue au moyen d'un ressort à lames (33) disposé à l'une de ses extrémités et d'un téton d'encliquetage (34) venant en prise dans des encoches (32) d'un rail d'encliquetage (30) fixé au réservoir, et **en ce que**, pour régler le point d'alimentation, le téton d'encliquetage (34) est dégagé par pression du ressort à lames (33) et s'encliquette à nouveau automatiquement après avoir atteint la nouvelle position.

13. Epandeur centrifuge selon la revendication 12, **caractérisé en ce que** les paliers (35) du ressort à lames (33) sont réglables par rapport aux encoches (32) du rail d'encliquetage (30) pour l'ajustement du dispositif de réglage (26).

14. Epandeur centrifuge selon l'une quelconque des revendications 8 à 12, **caractérisé en ce que** la graduation (37) pour le réglage du point d'alimentation est fixée sur la face extérieure du rail d'encliquetage (30) fixé au réservoir.

15. Epandeur centrifuge selon la revendication 1, **caractérisé en ce qu'**un entraînement (23) commandé à distance est fixé sur la plaque de dosage (15) pour commander le tiroir de dosage (48).

16. Epandeur centrifuge selon la revendication 15, **caractérisé en ce que** l'entraînement commandé à distance est du type mécanique, hydraulique (23) ou électrique.

17. Epandeur centrifuge selon la revendication 16, **caractérisé en ce que** les entraînements sont aisément interchangeables.

18. Epandeur centrifuge selon l'une quelconque des revendications 15 à 17, **caractérisé en ce que** par le réglage de la quantité, on peut régler une butée (43) pour une quantité de dosage prédéfinie, contre laquelle le tiroir de dosage vient en contact au moyen de l'entraînement (23) mécanique ou hydraulique.

19. Epandeur centrifuge selon l'une quelconque des revendications 1 à 18, **caractérisé en ce que** pour le réglage de la quantité, on prévoit un levier (40) plusieurs fois coudé, monté (41) sur la plaque de dosage (15) au niveau de son extrémité inférieure et guidé par un boulon (43) dans une fente en arc (44) ménagée dans la plaque de dosage, et guidé par son extrémité supérieure par un boulon dans une fente en arc (38) ménagée dans le panneau de commande (28).

20. Epandeur centrifuge selon la revendication 19, **caractérisé en ce que** le levier (40) plusieurs fois coudé compense la différence de hauteur et le décalage latéral entre la plaque de dosage (15) et le panneau de commande (28).

21. Epandeur centrifuge selon la revendication 15 et 19, **caractérisé en ce que** le boulon (43) guidé dans la fente en arc (44) de la plaque de dosage (15) constitue la butée pour l'entraînement (23) mécanique ou hydraulique en présence de la quantité de dosage prédéfinie.

22. Epandeur centrifuge selon l'une quelconque des revendications 19 à 21, **caractérisé en ce que** le boulon guidé dans la fente (38) en arc du panneau de commande (28) présente une vis à poignée (42) pour le réglage de la quantité de dosage à prédéfinir.

23. Epandeur centrifuge selon l'une quelconque des revendications 19 à 23, **caractérisé en ce qu'**une graduation de quantité (39) de forme identique est associée à la fente en arc (38) sur le tableau de commande (28).

24. Epandeur centrifuge selon l'une quelconque des revendications 8 et 19 à 23, **caractérisé en ce que** la graduation de quantité (39) est inclinée selon le même angle que la graduation de point d'alimentation (37).

25. Epandeur centrifuge selon l'une quelconque des revendications 13 à 25, **caractérisé en ce qu'**au téton d'encliquetage (34) est associé un bouton de commande (36) traversant le panneau de commande (28), disposé à proximité de l'extrémité libre du ressort à lames (33).

26. Epandeur centrifuge selon la revendication 25, **caractérisé en ce que** le bouton de commande (36) présente un indicateur indiquant la graduation de point d'alimentation (37).

27. Epandeur centrifuge selon l'une quelconque des revendications 1 à 26, **caractérisé en ce que** le tableau de commande (28) présente sur ses deux faces étroites opposées des poignées ou des bourrelets de préhension en matière plastique.

28. Epandeur centrifuge selon l'une quelconque des revendications 25 à 27, **caractérisé en ce que** le bouton de commande (36) est à portée du pouce de la main entourant une poignée ou un bourrelet de préhension du panneau de commande (28).

29. Epandeur centrifuge selon la revendication 1, **caractérisé en ce que** la plaque de dosage (15) peut être pivotée d'au moins 35 degrés.

30. Epandeur centrifuge selon la revendication 1 ou 29, **caractérisé en ce que** la plaque de dosage (15) peut être pivotée de telle façon que l'ouverture de dosage (14) se trouve placée au-dessus et à côté des éléments d'entraînement du disque répartiteur, de sorte qu'après avoir enlevé le disque répartiteur, le produit d'épandage peut s'écouler librement vers le bas à côté des éléments d'entraînement.

31. Epandeur centrifuge réalisé sous la forme d'un épandeur à deux disques présentant deux disques répartiteurs, **caractérisé en ce que** respectivement à gauche et à droite, sur les parties inférieures en forme de trémie (2) des parois de trémie correspondantes du réservoir (1), est disposé un dispositif de réglage (26) selon l'une quelconque des revendications 1 à 30 accessible du côté du réservoir.
